# EUROPEAN PATENT APPLICATION

(11) **EP 2 372 416 A1**
(43) Date of publication of application: **05.10.2011**
(21) Application number: 11160301.5
(22) Date of filing: 29.03.2011
(51) Int. Cl.: G02B 6/00

(54) **Light redirecting bar with diffusion features**

(30) Priority: 30.03.2010 US 749671
(71) Applicant: SKC Haas Display Films Co., Ltd., Choongchungnamdo (KR)
(72) Inventor: Hong, Qi, Rochester, NY 14615 (US); Bourdelais, Robert P., Pittsford, NY 14534 (US); McKenna, William, Rochester, NY 14617 (US)
(74) Representative: Buckley, Guy Julian

(57) **Abstract**

The present invention provides an integrated backlight illumination assembly for an LCD display comprising: a plurality of solid state light sources (12) for providing a point light source; a plurality of light guide films (20) having light redirecting areas provided between the plurality of solid state light sources for redirecting and spreading the point light sources to a uniform plane of light, a light redirecting bar (30) located between opposing light guide films (20), the light redirecting bar comprising a top capping portion (32) and a bottom portion (34), the bottom portion being aligned perpendicular to the top capping portion wherein said bottom portion has at least one light redirecting feature.

## Description

### FIELD OF THE INVENTION

The present invention relates to display illumination and more particularly relates to an optical light redirecting bar used to optically couple a point light source into a thin polymer light guiding film.

### BACKGROUND OF THE INVENTION

Transmissive Liquid Crystal Display (LCD) panels offer a compact, lightweight alternative to other types of displays, but require some type of backlight illumination to provide the light for modulation. Backlight illumination for LCD and similar displays is typically provided by a light-providing surface that is positioned behind the LCD panel, relative to the viewer, and that redirects light from one or more light sources through the LCD panel. One exemplary type of light-providing surface is a Light Guiding Plate (LGP). The LGP acts as a waveguide, using Total Internal Reflection (TIR) for redirecting incident light that it receives from one or more sources that are positioned along its side edges. Some type of surface featuring is provided on the LGP in order to extract internally reflected light and redirect this light toward the display panel. One example of an illumination apparatus using an LGP is given in U.S. Patent No. 5,999,685 entitled "LIGHT GUIDE PLATE AND SURFACE LIGHT SOURCE USING THE LIGHT GUIDE PLATE" to Goto et al.

Among drawbacks with solutions such as that proposed in the Goto et al. disclosure are the relative thickness and overall bulk of the conventional light guide plate. Conventional LGPs often exceed the thickness of the LCD panel itself. With the advent of larger displays such as LCD TV, and with the development of more compact solid-state light sources, such as Light-Emitting Diodes (LEDs), there is a need for an LGP solution that offers a thinner profile, weighs less, and is more flexible than existing designs. As displays continue to grow larger in scale and with increased use of more flexible substrates, there is growing demand for a more flexible LGP, with thickness approaching 1 mm.

A number of solutions have been proposed for LGP devices that are better suited to smaller and more flexible displays. However, the solutions proposed thus far have inherent drawbacks that limit their utility or make them difficult to manufacture. For example, various types of light-extracting features formed in the LGP surface have been proposed. However, the geometrical profile of many of the proposed light-extracting features require manufacturing methods such as injection molding or hot compression molding. These fabrication methods may work well with thicker materials, but prove increasingly difficult and impractical as LGP thickness decreases. For example, a number of proposed solutions require surface light-extraction features that have 90-degree vertical walls. Sharp angles at this scale can be very difficult to fabricate, using any method, with known plastic materials at the needed size. Still others require features having a relatively high height:width aspect ratio, features difficult to fabricate for similar reasons. Although such structures may work well in theory and although their fabrication may be possible, the manufacturing problems they present make many of the proposed designs impractical for mass production. Little attention seems to have been paid to how an LGP having light-extraction features with sharply-angled side-walls can be economically mass produced.

Further, LCD TVs that use LEDs as a light source commonly use thick LGP with top emitting LEDs arranged around the perimeter of the LGP. The top emitting LEDs, which are arranged around the perimeter of the LGP are typically located under the bezel. The bezel serves to cover and absorb the unwanted LED generated light not coupled into the LGP/LED interface. Thus the uncoupled LED generated light is not used to illuminate the LCD and is wasted.

Prior art LED backlight assemblies often utilize side emitting LED or top emitting LED turned on end as a light source for light guide plates. In order to improve the optical coupling efficiency of those prior art backlight unit assemblies, the LED output needs to be within 150 micrometers of the input surface of the light guiding plate. The relatively small distance between the Led output surface and the input surface of the light guide plate causes two large problems. First, the heat energy from the LED often can cause distortion of the input surface over time reducing light coupling efficiency. Secondly, variation in the distance between the LED output and the light guide plate input causes undesirable variation in the amount of light input into the light guide plate and thus increase the output variation from the light guiding plate.

While the use of LED as a lighting source for a LC panel allows the LED to be globally dimmed in registration with the image content to reduce overall power consumption for LCD TV, these edge-lit LED TVs typically are not capable of being locally dynamically dimmed because of the perimeter positioning of the LEDs. Local dimming of LEDs has been shown to further reduce the overall power consumption of LED illuminated LCD TV compared to global dimming as small groups of LED can be dimmed in registration with the image content. Further local dimming also been shown to significantly improve the contrast ratio of the displayed image compared to global dimming.

Thus, it is recognized that there is a need for light guiding surface solutions that allow the use of flexible materials, that can be produced with a relatively thin dimensional profile, that are designed for high-volume manufacture and can be local dimmed. Further, it is also recognized that to improve the optical uniformity of light guiding plates, an alternate LED coupling mechanism is required.

### SUMMARY OF THE INVENTION

The present invention provides an integrated backlight illumination assembly for an LCD display comprising: a plurality of solid state light sources for providing a point light source; a plurality of light guide films having light redirecting areas provided between the plurality of solid state light sources for redirecting and spreading the point light sources to a uniform plane of light, a light redirecting bar located between opposing light guide films, the light redirecting bar comprising a top capping portion and a bottom portion, the bottom portion being aligned perpendicular to the top capping portion wherein said bottom portion has at least one light redirecting feature.

### BRIEF DESCRIPTION OF THE DRAWINGS

Figure 1 shows a display apparatus using the light-guiding film of the present invention.
Figure 2 shows a perspective view of the light-guiding film in one embodiment.
Figures 3A, 3B, 3C, and 3D show light behavior for incident light at features in the light-guiding film surface.
Figure 4 is another embodiment of the invention showing a perspective view showing a portion of the light guide film, light source and light redirecting bar with light re-directing features.
Figure 5 is another embodiment of the invention showing a 3-D perspective view showing a portion of the light guide film, light source and light redirecting bar with light re-directing features.
Figure 6A is another embodiment of the invention showing a cross section of a light redirecting bar and light source.
Figure 6B is another embodiment of the invention showing a cross section of a V-groove light redirecting bar with light spreading lenses in relation to a point light source.
Figure 7A is another embodiment of the invention showing a cross section of a light redirecting bar having a multiple surface light redirecting area in relation to a point light source.
Figure 7B is another embodiment of the invention showing a cross section of a light redirecting bar having a curved light redirecting area in relation that forms an apex in relation to a point light source.
Figure 7C is another embodiment of the invention showing a cross section of a light redirecting bar having a curved light redirecting area in relation to a point light source.
Figure 8A is another embodiment of the invention showing a perspective view of light spreading lenses.
Figure 8B is another embodiment of the invention showing a perspective view of light spreading lenses
Figure 8C is another embodiment of the invention showing a perspective view of light spreading lenses
Figure 9 is a cross section of another embodiment of the invention showing a light redirecting bar having a v-groove light redirecting area in relation to light guide film and point light sources.
Figure 10A is a cross section of another embodiment of the invention showing a light redirecting bar having a v-groove on both the top and bottom surfaces in relation to a point light source.
Figure 10B is a cross section of another embodiment of the invention showing a light redirecting bar having a v-groove on both the top and bottom surfaces that are populated with light spreading lenses in relation to a point light source.
Figure 11A is a cross section of another embodiment of the invention showing a light redirecting bar having a bottom v-groove light redirecting section and top curved light redirecting section in relation to a point light source.
Figure 11B is a cross section of another embodiment of the invention showing a light redirecting bar having a bottom v-groove light redirecting section and top v-groove light redirecting section in relation to a point light source.
Figure 11C is a cross section of another embodiment of the invention showing a light redirecting bar having a bottom v-groove light redirecting section and top multi-surface light redirecting section in relation to a point light source.
Figure 11D is a cross section of another embodiment of the invention showing a light redirecting bar having a bottom v-groove light redirecting section and top curved light redirecting section that forms an apex in relation to a point light source.

### DETAILED DESCRIPTION OF THE INVENTION

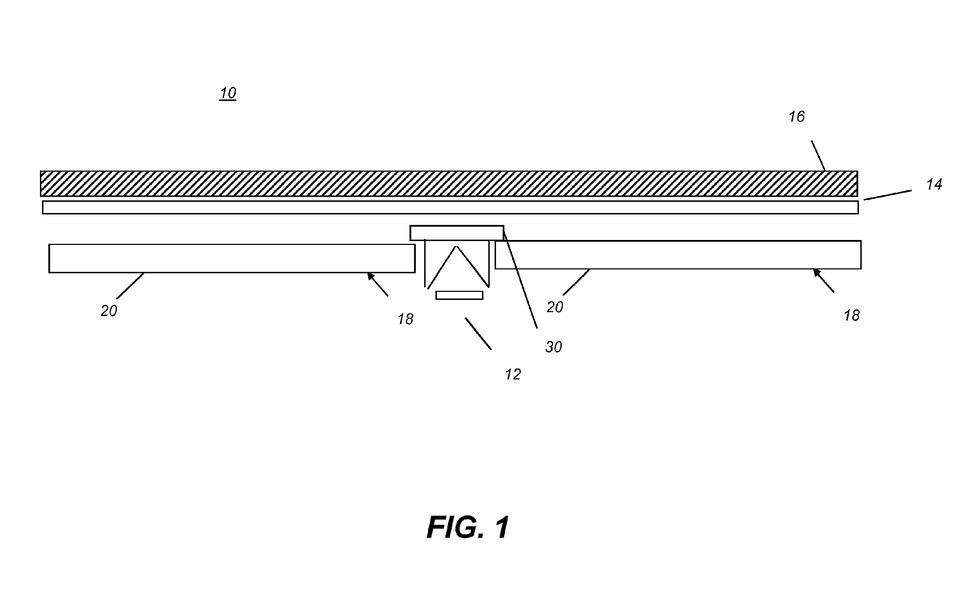

Referring to Figure 1, there is shown, in cross-section, an embodiment of a display apparatus 10 with an backlight illumination assembly 18 using at least two light-guiding articles, light-guiding film (LGF) 20, according to the present invention. A light source 12 directs illumination through an incident edge 22 of LGF 20. LGF 20 redirects this illumination outward, through one or more top diffusion films 14 and to a spatial light modulator, here an LCD display 16, that modulates the illumination. Light redirecting bar 30 is situated above point light source 12 and both redirects light energy from point light source 12 into light guiding film 20 and diffuses that energy that is not coupled into light guiding film 20. Preferably, the luminance difference between the light redirecting bar 30, and the output surface 24 is +/- 10%, more preferably +/- 5%. Reducing the luminance difference between the light redirecting bar and adjacent light guiding films results in a desirable uniform light output from the backlight assembly unit. Luminance differences greater than 15% can be visually observed and results in poor image quality. Reducing the luminance difference is achieved by balancing the light output from output surface 24, with the light output from light redirecting bar 30. The luminance from output surface 12 is controlled by the size, shape and pitch of light extraction features 26 at or near the incident edge 22. The luminance of light redirecting bar 30 is controlled by the diffusion characteristics of the light redirecting bar material, the profile of the joining clip, the thickness of the light redirecting bar and the amount of un-coupled light from light source 12 into incident edge 22.

Light source 12 can use any of a number of types of light-emitting elements. Conventional LGPs used for laptop computer and larger displays have used CCFLs (Cold-Cathode Fluorescent Lamps). LGF 20 of the present invention can use this thicker type of light source but is advantaged for use with thin-profile light sources such as a linear array of LEDs, linear array of OLED or other linear solid-state source.

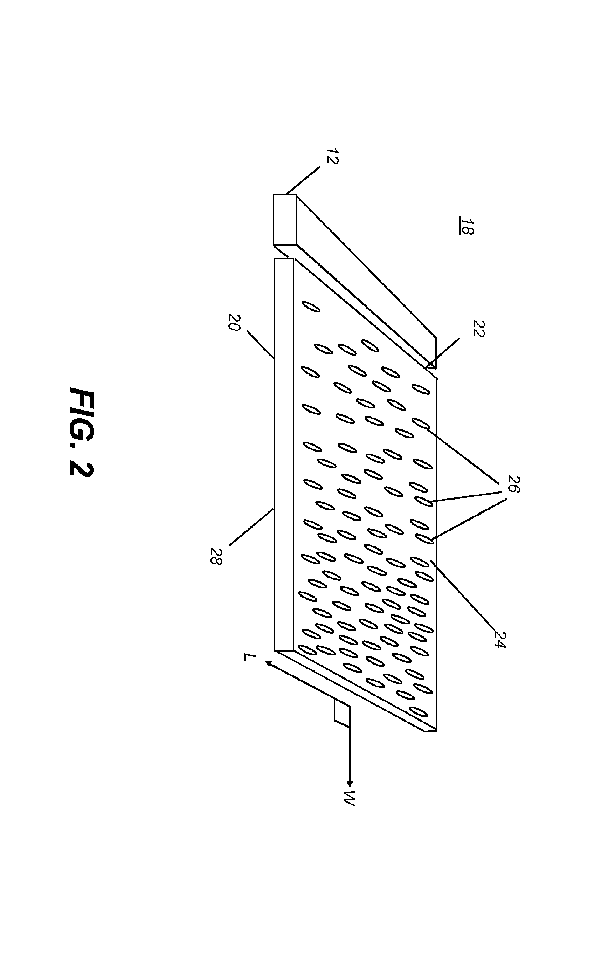

The perspective view of Figure 2 shows aspects of LGF 20 and its light-exiting output surface 24 in illumination apparatus 18. As shown in Figure 2, light source 12 directs illumination into incident edge 22 which is substantially orthogonal to output surface 24. Discrete light-extracting features 26 are formed on output surface 24, or, alternately, on a bottom surface 28, so that either or both output surface 24 and bottom surface 28 are patterned surfaces. As is seen in more detail in subsequent figures, light-extracting features 26 can be dimensionally extended along a length direction L of LGF 20 and can be narrower in a width direction W, orthogonal to length direction L. Light source 12 is generally arranged along length direction L. Light-extracting features 26 may be spatially distributed at equal intervals over surface 24 or 28; however, there can be advantages to embodiments in which the spatial distribution or the size or pitch of light-extracting features 26 varies with distance from incident edge 22 in width direction W, as is shown in Figure 2 and described subsequently.

Referring to Figure 2, in one embodiment of the invention, light guiding film 20 is provided with a relative small amount area in the L and W plane that does not contain any light extraction features. This relatively small area, which is approximately 1 to 10 % of the total area of light guiding film 20 in the L and W plane, functions as a mixing area for light sources 12. This mixing area is particularly important for multi-mode light sources such as RGB or RGBW or RGGB. The mixing area has been shown to be an efficient method for the mixing of multi-mode light sources to create white light with a higher color gamut than prior art white LEDs containing a blue die and yellow phosphor.

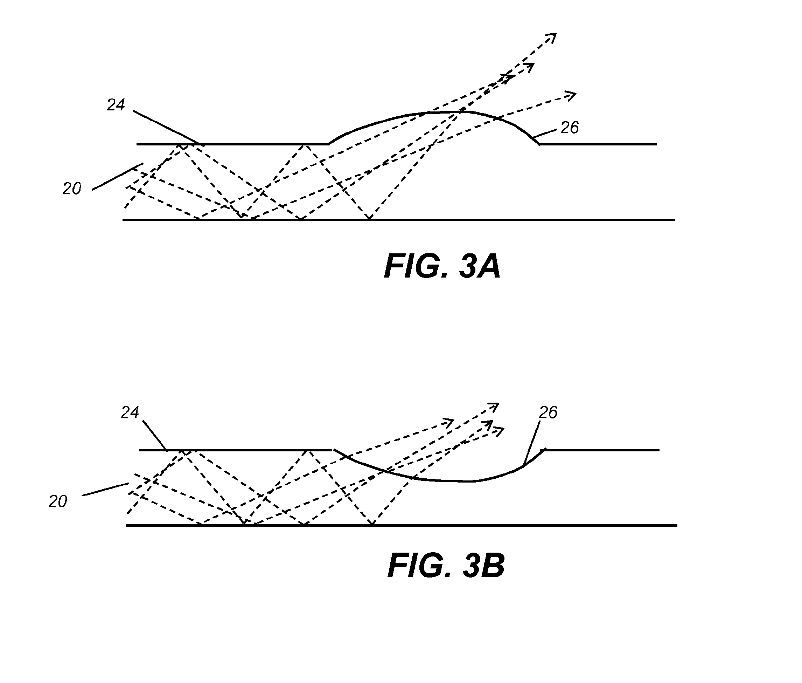

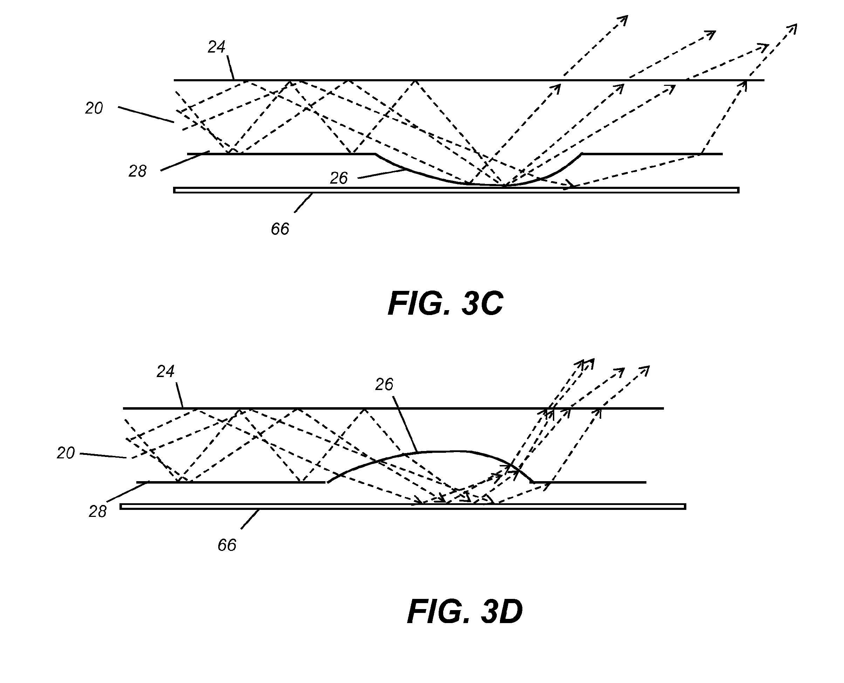

Figures 3A, 3B, 3C, and 3D show, in cross-section views, different arrangements of light-extracting features 26 on the patterned surface, either output surface 24 or bottom surface 28. Dashed lines in these figures indicate different exemplary light paths that illustrate the behavior of light-extracting features 26. Light is directed within LGF 20 by Total Internal Reflection (TIR), a principle familiar to those skilled in the light-guide art.

The general function of light-extracting features 26, whether they protrude from or are formed into surface 24 or 28, is to frustrate TIR, causing this light to escape from LGF 20. Figures 3A and 3B show light behavior for two types of light-extracting features 26 formed on output surface 24, protruding from the surface or indented into the surface, respectively. In either case, internally reflected light is directed outward from output surface 24 when it impinges on the surface of light-extracting features 26.

Figures 3C and 3D show alternate embodiments in which light-extracting features 26 are formed on bottom surface 28. A reflective surface 66 is provided as part of illumination apparatus 18 (Figures 1 and 2) with these embodiments for redirecting light that has been extracted using light extracting features 26. Reflective surface 66 redirects this light back through LGF 20 and out through output surface 24.

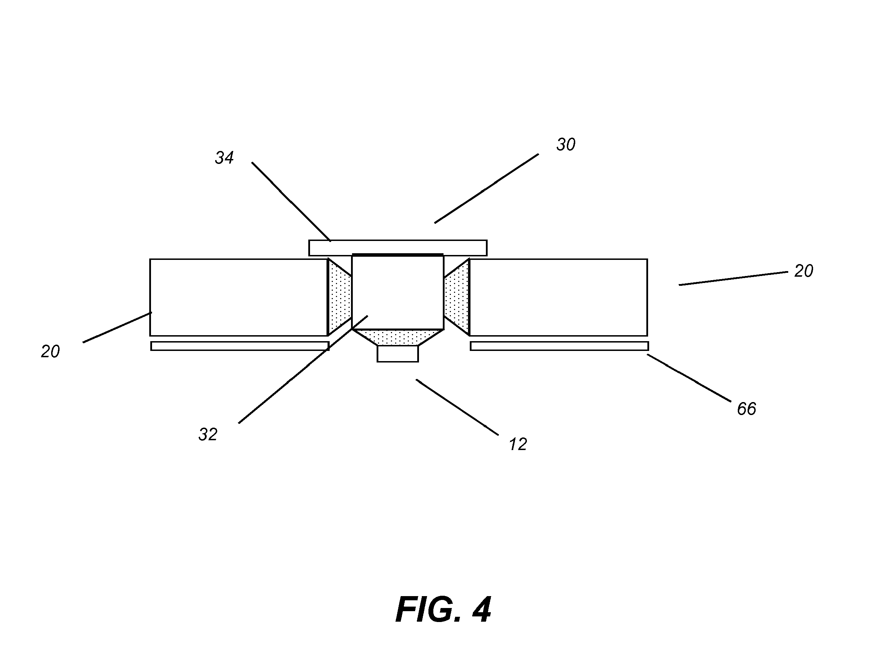

Figure 4 shows a perspective view of the light guiding film 20 and point light sources 12. The light sources 12 are arranged below the incident edge of light guiding film 20. Below the light guiding films is a reflector 66 to reflect light incident on the reflector 66 toward the film 20. Light guiding films 20 are arranged sequentially or in a pattern to create a uniform, bright backlight illumination assembly. Point light sources 12 are in the illumination area of the backlight illumination assembly. For LCD TV applications, the lengths L of the light guiding films 20 are preferably greater than the width W. More preferably, the length L is greater than 10 times the width W of the light guiding films.

The light sources in Figure 4 are located adjacent to light redirecting bar 30 and below the plane of light guiding films 20. Light redirecting bar 30 preferably redirects light energy from light source 12 into the light guiding films 20 on the right and left of light redirecting bar 30. Preferably, the light redirecting bar 30 redirects greater than 80 of the total light energy emanating from light source 12 into light guiding films 20. The light energy that is not is not optically coupled into light guiding films 20 is diffused by light redirecting bar 20 such that the light output from the top capping portion 34 is substantially the same as the light output from the top surface of light guiding films 20.

The light sources 12 in Figure 4 are preferably arranged such that the backlight illumination assembly can be locally dimmed in registration with image content of display devices. Local dimming of the point light sources has been shown to both reduce power consumption of LCD and significantly improve the contrast ratio of LCD. By dimming sub-groupings of light sources 12, small, defined areas of light guiding film 20 can be dynamically dimmed by changing the current supplied to light sources 12. The size of the dimmed area is a function of the number of point light sources that are dimmed and the width W of the light guiding film 20. The light sources 12 can be arranged to input light into a single light guiding film 20 or can be arranged to input light into two adjacent light guiding films. Light sources preferably are arranged in a side by side configuration to allow for even light input into light guiding film 20.

Light sources 12 are distributed and arranged in between sections light guiding films 20. The distribution of the light sources 12 between light guiding films 20 results in a backlight assembly that has lower temperature gradients across the backlight illumination assembly compared to edge lit backlight units that have concentrated heat generation points. High temperature gradients such as those found with prior art edge illuminated backlight assemblies results in undesirable waving or creasing of optical components due to differences in thermal expansion resulting from temperature gradients. Further, higher temperature gradients that exist in edge illuminated backlight assemblies often require expensive, heavy metallic frames to be used to resist thermal waving and buckling.

A sufficiently small gap between the light guiding film 20 and light redirecting bar 30 has been shown to reduce undesirable thermal buckling and waving. Buckling and waving of light guiding films reduces the uniformity of light output from the light guiding film 20. It has been found that the sufficiently small gap between the light guiding film 20 and light redirecting bar 30 creates physical space for a thermally expanded polymer light guiding film. This light guiding film gap is similar in concept to a thermal expansion gap common utilized in roads and bridges. The size of the thermal expansion gap is related to the operating conditions of the backlight assembly and the coefficient of thermal expansion of the light guiding films.

The pitch of light sources 12 along the L direction is a function of the desired light output characteristics of light guiding film 20. The density, pitch and size of light extraction features 26 are also a function of the desired light output characteristics of light guiding film 20. The size, location and pitch of the light extraction features is also related to the optical output characteristics of light source 12. Important optical characteristics of light source 12 include chromaticity, light distribution and illuminance intensity. Generally, the density of light extraction features 26 is lower at the light incident surface 22 compared to the side opposite the light incident surface to allow for uniform extraction of light energy.

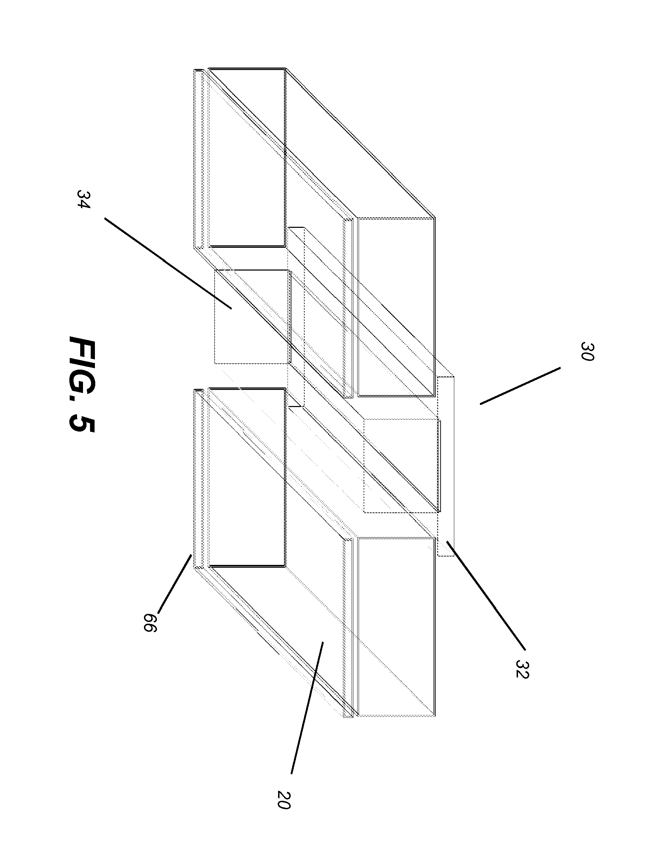

Figure 5 is a 3 dimensional view showing a portion of the light guide film 20, location of a light source 12 and light redirecting bar 30. Light redirecting bar 30 comprises bottom portion 34 and top capping portion 32. In one embodiment of the invention, top capping portion 32 contacts light guiding film 20. The contact enables both consistent diffusion and redirecting of point light sources.

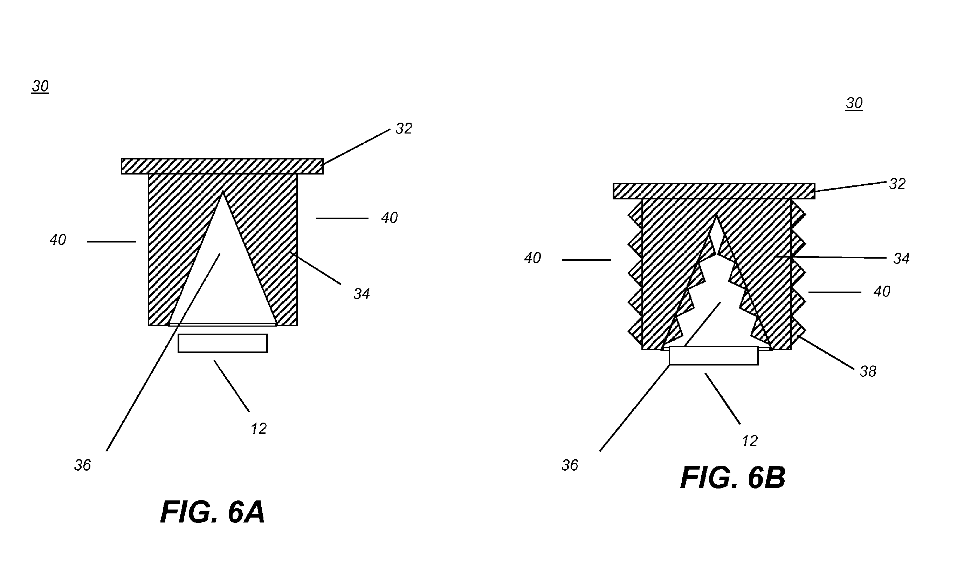

Figure 6A is a cross section view of light redirecting bar 30 in relation to point light source 12. Light redirecting bar 30 comprises top capping portion 32 and bottom portion 34. Bottom portion 34 comprises light redirecting feature 36. In Figure 6A, the light redirecting feature is opposing sloping surfaces that terminate at a v-groove. Light energy from light source 12 in incident on light redirecting feature 36 is redirected toward light diffusion bar light output surface 40. The light redirecting bar 30 enables the use of top emitting LEDs that are commonly utilized in LCD TV backlight assembles. Prior art backlight assemblies generally use top emitting LEDs, rotated 90 degrees such that the output lenses of the top emitting LED is directed at prior art light guide plates. The rotation of the top emitting LED in prior art systems creates heat transfer problems as typical efficient heat sinking technology can not be easily utilized. Further, the electronic control board must also be rotated and tends to interfere with the optics. Light diffusion bar 30 allows the top emitting LED to have the output lens directed at the light redirecting feature 30. This preferred orientation of the LED allows the LED to have contact with a backplane that can efficiently heat sink the LED. Further, the control board does not interfere with the optics of the system. The light redirecting bar 30 enables LEDs to be efficiently placed in the illumination areas of the backlight illumination assembly.

Figure 6B is a cross section of a light redirecting bar 30 that is populated with light spreading lenses 38 on both the light spreading feature 36 and the diffusion bar light output surface 40. Preferably, the light spreading lenses are pyramids that have an included angle of between 80 and 100 degrees. The pyramid lenses on surface 36 significantly increase the optical coupling efficiency from light source 12 into light redirecting bar 30. The pyramid lenses on diffusion bar light output surface 40 both collimate and diffuse light energy thereby increasing the optical coupling efficiency between the light redirecting bar and light guiding films.

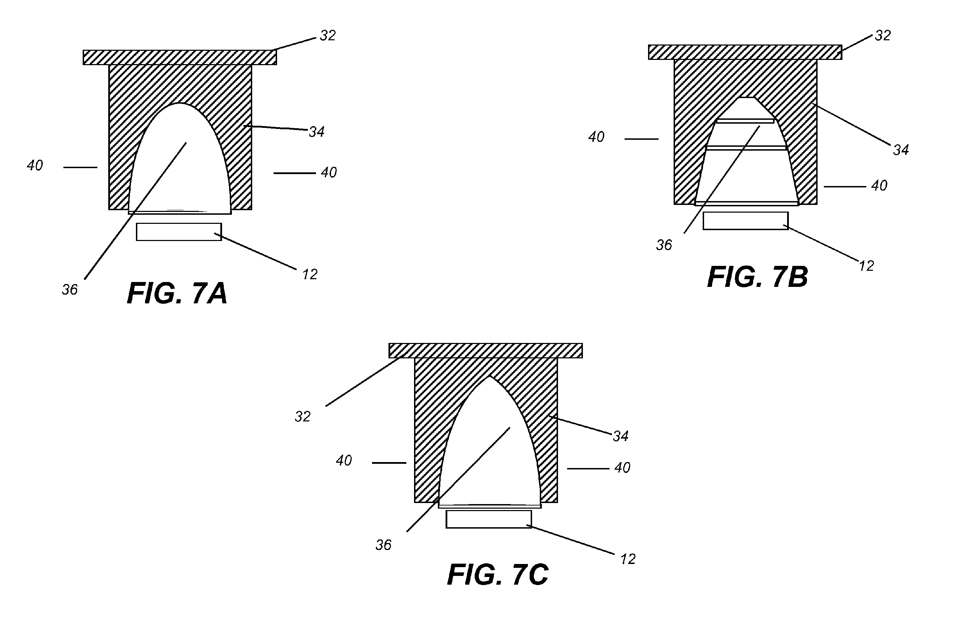

Figure 7A, 7B and 7C are cross section views of light redirecting bar 30 in relation to point light source 12. As depicted in Figure 7A, the light redirecting feature 36 is preferably a single curved surface. In another embodiment of the invention, light redirecting feature is a combination of multiple-facet planar or surface as shown in Figure 7B. In a further embodiment of the invention, light redirecting feature is preferably a combination of multiple-facet surface as illustrated in Figure 7C. The light redirecting feature 36 in Figures 7A, 7B, and 7C may also contain small lenses to improve optical coupling between light source 12 and light redirecting feature 36.

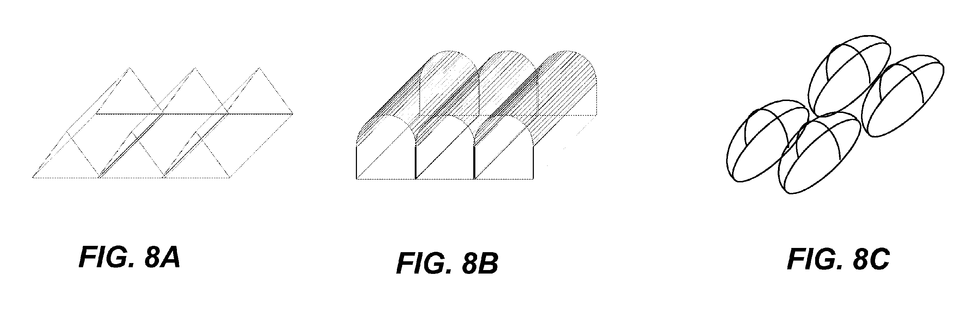

Figures 8A, 8B and 8C show preferred light spreading lenses that may be present on the redirecting feature and/or the output surface. The lenses in Figures 8A, 8B and 8C have been shown to increase the optical coupling efficiency between the light source and light redirecting bar as well as between the light redirecting bar of the invention and the light guiding films. On the output surface of the light redirecting bar, the lenses have also been shown to narrow the light output distribution allowing reductions in light guiding film thickness and improved coupling efficiency.

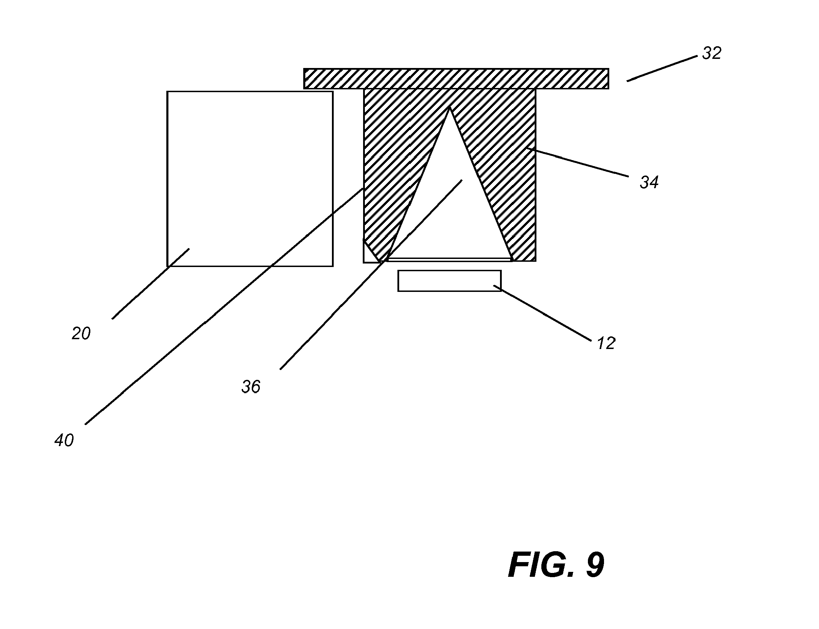

Figure 9 is a cross section view of light redirecting bar 30 in relation to point light source 12 and light guiding film 20. Light redirecting bar 30 preferably has a light collimating slope 42 adjacent to light output surface 40 to reduce the height of light redirecting bar 30 and light guiding film 20 compared to a light redirecting bar without light collimate slope 42. Reducing the thickness of both the light redirecting bar 30 and light guiding film 20 reduces backlight assembly cost, lower the weight of the backlight unit assembly and results in a desired thinner backlight unit assembly.

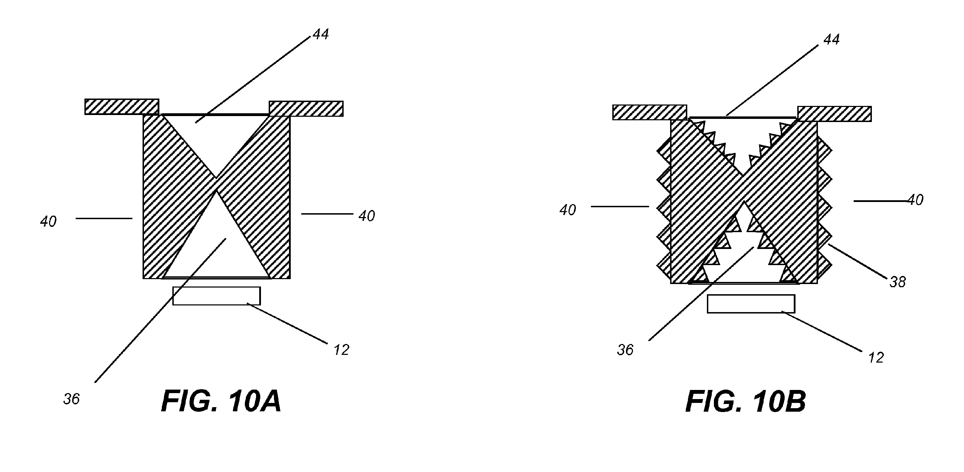

Figure 10A and 10B are cross sectional views of light redirecting bar 30 in relation to point light source 12. Light redirecting surfaces 36 redirects light energy from light source 12 toward output surface 40. Top capping portion 32 reduces a high brightness spot due to the light Fresnel reflections on the input edge of light guide input surface. Lenses preferably are on both light redirecting features 36 and output surfaces 40 as shown in Figure 10B. Lens structure on the input and output surfaces of the light redirecting bar can be linear prismatic lens as illustrated in Figure 8A, or cylindrical lens in Figure 8B, or individual element as shown in Figure 8C.

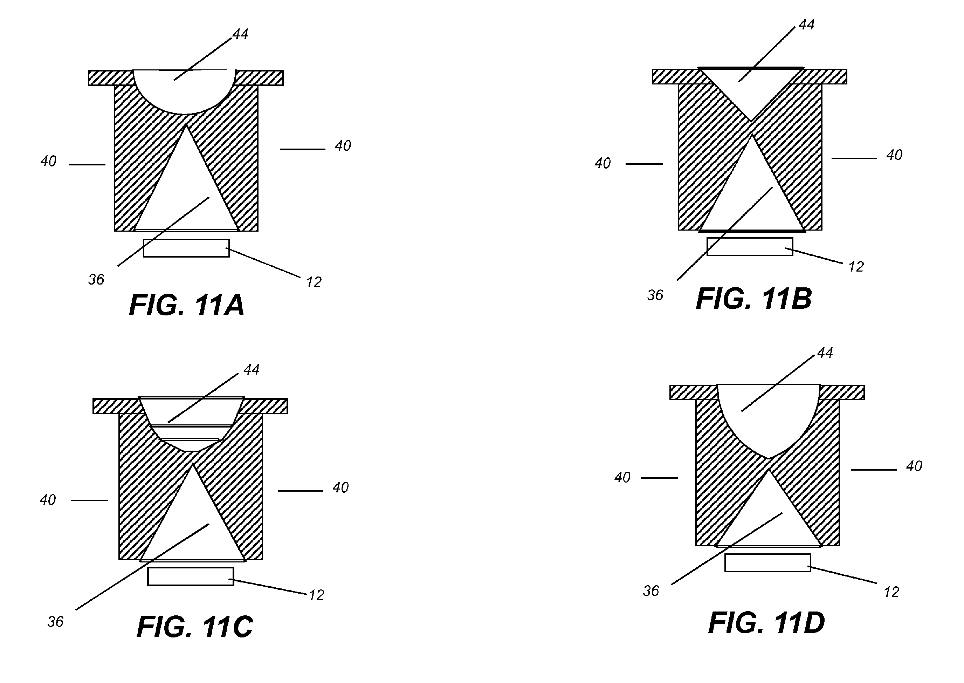

Figures 11A, 11B, 11C and 11D are cross sectional views of light redirecting bar 30 in relation to point light source 12. Figures 11A, 11B, 11C and 11D the light redirecting bars 30 preferably have both a bottom light redirecting feature 36 and a top light redirecting feature 44. Figure 11A shows a light redirecting bar with planner bottom feature 36 and a single curved top feature 44. Figure 11B shows a planner bottom feature 36 and a planner top feature 44. Figure 11C shows a light redirecting bar with planner bottom light redirecting surface and multi-facet light redirecting top surface. Figure 12C shows a light redirecting bar with a planner light redirecting bottom surface and a parabolic top light redirecting surface. The light redirecting bars shown in Figures 11A, 11B, 11C and 11D and may smooth surfaces or may be populated with lens structure on the input and/or output surfaces of the light redirecting car. The lenses can be linear prismatic lens as illustrated in Figure 8A, or cylindrical lens in Figure 8B, or individual element as shown in Figure 8C.

Advantageously, the light redirecting bar comprises two distinct sections that differ in material content. By utilizing two or more distinct sections, the material composition and addenda can be altered to improve the efficiency of the light redirecting bar. For example, the top capping portion of the light redirecting bar can have a material composition that that aids in diffusion, and the bottom portion of the light redirecting bar can be made substantially transparent to improve the light redirection efficiency of the bottom portion.

### Materials Used

LGF 20 may be formed from any of various types of transparent materials, including, but not limited to polycarbonate, polyethylene terephthalate (PET), polyethylene naphthalate (PEN), or polymethyl methacrylate (PMMA).

Light redirecting bar may be formed from various types of polymer materials, preferably thermoplastics. Examples of preferred materials include, but not limited to polycarbonate, polyethylene terephthalate (PET), polypropylene, polyethylene naphthalate (PEN), or polymethyl methacrylate (PMMA).

Advantageously, the light redirecting bar of the invention contains forward scattering addenda. Forward scattering is the deflection by diffraction, nonhomogeneous refraction, or nonspecular reflection by particulate matter of dimensions that are large with respect to the wavelength in question but small with respect to the beam diameter-of a portion of an incident electromagnetic wave, in such a manner that the energy so deflected propagates in a direction that is within 90° of the direction of propagation of the incident wave. The scattering process may be polarization-sensitive, that is incident waves that are identical in every respect but their polarization may be scattered differently. An example of a preferred forward scattering addendum is core shell particles that have an index of refraction gradient of at least 0.02. Forward scattering is the preferred form of scattering because it reduces adsorption losses compared to reflective scattering and results in a more uniform backlight assembly.

Features formed on the patterned surface of the light-guiding film help to provide illumination for LCD and other types of backlit displays, particularly for smaller displays and portable devices. Embodiments of the present invention provide a light-guiding film that can be fabricated at thickness of 1 mm or less. This makes the LGF of the present invention particularly advantageous for use with LED, OLED or laser arrays and other linear solid state light arrays.

The diffusion bar of the invention is preferably made using a process known as profile extrusion. This process is used to manufacture plastic products with a continuous cross-section such as; drinking straws, polymer gaskets, decorative molding, window trimming and a wide variety of other products polymer melt into the hollow mold cavity under high pressure.

The desired polymer is fed in pellet form into the machines hopper (this machine is known as an extruder), the material is conveyed continuously forward by a rotating screw inside a heated barrel being softened by both friction and heat. The softened polymer is then forced out through a die and directly into cool water where the product solidifies. From here it is conveyed onwards into the take-off rollers, which actually do the pulling of the softened plastic from the die.

The die is a metal plate placed at the end of the extruder with a section cut out of its interior, this cutout, and the speed of the take-off rollers, determines the cross-section of the product being manufactured. The product comes out in a solid rod because of the opening at the end of the tube, if that opening had a different cross-section than the product produced would take on that new cross-section. Basically extrusion can be defined as forcing a material through a die orifice. This die orifice produces the final shape of the finished product.

Advantageously, the light redirecting bar has two or more sections that differ in material composition. Preferably, co-extrusion is used to manufacture a multiple-material light redirecting bar. Co-extrusion is the extrusion of multiple layers of material simultaneously. This type of extrusion utilizes two or more extruders to melt and deliver a steady volumetric throughput of different viscous plastics to a single extrusion head (die) which will extrude the materials in the desired form. The layer thicknesses are controlled by the relative speeds and sizes of the individual extruders delivering the materials.

## Claims

1. An integrated backlight illumination assembly for an LCD display comprising:
a plurality of solid state light sources for providing a point light source;
a plurality of light guide films having light redirecting areas provided between the plurality of solid state light sources for redirecting and spreading the point light sources to a uniform plane of light
a light redirecting bar located between opposing light guide films, the light redirecting bar comprising a top capping portion and a bottom portion, the bottom portion being aligned perpendicular to the top capping portion wherein said bottom portion has at least one light redirecting feature.

2. The backlight illumination assembly of claim 1 wherein the light redirecting bar comprises materials selected from polycarbonate, polymethyl methacrylate (PMMA), polystyrene, urethane, polypropylene, polysulfone and nylon.

3. The backlight illumination assembly of claim 1 wherein the light redirecting bar comprises forward scattering addenda.

4. The backlight illumination assembly of claim 1 wherein the light redirecting bar comprises light emitting phosphor.

5. The backlight illumination assembly of claim 1 wherein the light redirecting bar comprises polymer core shell particles in an amount of between 0.1 and 90 weight percent of the light redirecting bar.

6. The backlight illumination assembly of claim 1 wherein the light redirecting feature has a roughness average of between 0.1 and 2000 micrometers.

7. The backlight illumination assembly of claim 1 wherein the light redirecting feature comprises planner surfaces that form a v-groove.

8. The backlight illumination assembly of claim 1 wherein the light redirecting feature comprises at least one curved surface.

9. The backlight illumination assembly of claim 1 wherein the light redirecting feature comprises multiple surfaces.

10. The backlight illumination assembly of claim 1 wherein the light redirecting feature further comprises light spreading lenses on the surface of the light redirecting feature.

11. The backlight illumination assembly of claim 1 wherein the light redirecting feature is vertically aligned with point light sources.

12. The backlight illumination assembly of claim 1 wherein both the top capping portion and the bottom portion comprise light redirecting feature.

13. The backlight illumination assembly of claim 1 wherein light redirecting bar comprises two distinct sections that differ in material composition.

14. The backlight illumination assembly of claim 1 wherein light redirecting bar comprises a diffuse top capping portion and a substantially transparent bottom portion.
